# EUROPEAN PATENT SPECIFICATION

(11) **EP 4 332 566 B1**
(45) Date of publication and mention of the grant of the patent: **29.04.2026**
(21) Application number: 22795207.4
(22) Date of filing: 03.02.2022
(51) Int. Cl.: G01N 30/26, G01N 30/20, G01N 30/34, G01N 30/38, G01N 30/86, G01N 30/02

(54) **LIQUID CHROMATOGRAPH AND LIQUID FEEDING METHOD**
FLÜSSIGKEITSCHROMATOGRAPH UND FLÜSSIGKEITSZUFUHRVERFAHREN
CHROMATOGRAPHE EN PHASE LIQUIDE ET PROCÉDÉ D'ALIMENTATION EN LIQUIDE

(30) Priority: 26.04.2021 JP 2021073758
(43) Date of publication of application: 06.03.2024
(73) Proprietor: HITACHI HIGH-TECH CORPORATION, Tokyo 105-6409 (JP)
(72) Inventor: AKIEDA Daisuke, Tokyo 105-6409 (JP); HARADA Yushi, Tokyo 105-6409 (JP); TOMIDA Shoji, Tokyo 105-6409 (JP); MATSUOKA Shinya, Tokyo 105-6409 (JP); HASHIMOTO Yuichiro, Tokyo 105-6409 (JP)
(74) Representative: MERH-IP Matias Erny Reichl Hoffmann Patentanwälte PartG mbB
(86) International application number: PCT/JP2022/004221
(87) International publication number: WO 2022/230284

(56) References cited:
- JP-A- 2004 150 402
- JP-A- 2014 062 827
- JP-A- H03 223 671

## Description

### Technical Field

The present invention relates to a liquid chromatograph and a liquid delivery method.

### Background Art

A liquid chromatograph (LC) is a device that delivers a liquid mobile phase to a column packed with a filler (stationary phase) to separate a liquid sample, which is a measurement target, into components and thus the separated components are detected by a detector such as an ultraviolet and visible light absorption photometer, a fluorophotometer, and a mass spectrometer connected to the subsequent stage.

In the liquid chromatograph, the mobile phase delivered from a liquid delivery device to a column serves a function that separates a measurement target sample into components based on the difference in affinity from the stationary phase filled in the column with the transport of the measurement target sample. In the liquid chromatograph, various types of mobile phases such as ultrapure water, an organic solvent, and a buffer solvent are selected suitable for measurement purposes and types of liquid samples.

The mobile phase used in the liquid chromatograph greatly affects the measured result due to the properties of the mobile phase. For example, it is considered that bubbles mixed into the mobile phase are transported to the liquid delivery device or the passage downstream the liquid delivery device and this noticeably degrades the accuracy of measured results.

The mixing of bubbles into the mobile phase occurs in the case in which, for example, an operator replaces a mobile phase supply bottle or supplies the mobile phase, and the like. As the factors of mixing bubbles into the mobile phase, the operator's oversights of bubbles or mistakes in work as well as the lack of the operator's work experience, the installation environment of the liquid chromatograph, types of mobile phases for use, and the like affect the mixing of bubbles. Therefore, even though the operator proceeds to work with chariness so as not to mix bubbles into a supply tube, it is difficult to make the possibility of mixing bubbles zero.

Therefore, regardless of the presence or absence of mixing of bubbles into the mobile phase, a process of removing bubbles is preferably executed after the replacement of the mobile phase supply bottle or after the mobile phase supply work.

As an example of a technique related to the removal of bubbles mixed in the mobile phase, a technique described in Patent Literature 1 is known. Patent Literature 1 discloses a degassing liquid delivery device having, from an upstream to a downstream, a degassing mechanism that removes at least a gas in a liquid, a delivery mechanism that delivers a liquid, and a branch part that is branched into a plurality of passages in this order, and has a joining part at which one of the plurality of passages branched at the branch part is joined to the upstream of the degassing mechanism.

### Citation List

### Patent Literature

Patent Literature 1: Japanese Unexamined Patent Application Publication No. 2014-62827

### Summary of Invention

### Technical Problem

In the previously existing technique, the degassing mechanism is disposed on the delivery channel of the mobile phase, the mobile phase is repeatedly passed through the degassing mechanism, and it is intended to remove bubbles mixed in the mobile phase and to reduce the dissolved air amount of the mobile phase. However, it is difficult to determine whether bubbles mixed in the mobile phase are sufficiently removed. It is considered that in the case in which the degree of the operator's skills is low, degassing is performed unnecessarily for a long time or degassing is insufficient.

The present invention is made in view of the circumstances. It is an object to provide a liquid chromatograph and a liquid delivery method capable of more easily and reliably removing bubbles mixed in the installation work or replacement work of a mobile phase

### Solution to Problem

The present application includes a plurality of solutions to solve the problems. An example of the solutions includes a liquid chromatograph, including: a separation column incorporating a stationary phase; a liquid delivery device configured to deliver a liquid, which is a mobile phase, to the separation column; a sample injection device configured to inject a sample to be analyzed into the liquid delivered from the liquid delivery device to the separation column; a liquid supply device configured to supply the liquid to the liquid delivery device; and a control device configured to control operations of the liquid delivery device and the liquid supply device. The liquid supply device includes a liquid storage container configured to store the liquid to be supplied to the liquid delivery device, a supply pipe configured to connect the liquid delivery device and the liquid storage container, a circulation pipe configured to connect an intermediate portion of the supply pipe and the liquid storage container and return the liquid delivered through the supply pipe to the liquid storage container, a flow passage switching valve provided on a connection portion between the supply pipe and the circulation pipe, and configured to selectively switch between a liquid delivery state in which the supply pipe on a liquid storage container side and the supply pipe on the liquid delivery device side communicate with each other and a circulation state in which the supply pipe and the circulation pipe on a liquid storage container side communicate with each other, a bubble detection device provided on the supply pipe between the liquid storage container and the flow passage switching valve and configured to detect presence or absence of bubbles of the liquid delivered through the supply pipe, and a circulation liquid delivery device provided on the circulation pipe and configured to deliver the liquid from a flow passage switching valve side to a liquid storage container side, and the control device is configured to switch the flow passage switching valve to the circulation state to perform a circulation liquid delivery by the circulation liquid delivery device, and switch the flow passage switching valve to the liquid delivery state when the bubbles of the liquid are not detected by the bubble detection device.

### Advantageous Effects of Invention

According to the present invention, it is an object to provide a liquid chromatograph and a liquid delivery method capable of more easily and reliably removing bubbles mixed in the installation work or replacement work of a mobile phase.

### Brief Description of Drawings

[FIG. 1] FIG. 1 is a diagram schematically showing an overall configuration of a liquid chromatograph analysis device according to a first embodiment.
[FIG. 2] FIG. 2 is a flowchart showing an operation content of a liquid supply device according to the first embodiment.
[FIG. 3] FIG. 3 is a diagram schematically showing an overall configuration of a liquid chromatograph analysis device according to a second embodiment.
[FIG. 4] FIG. 4 is a flowchart showing an operation of a liquid supply device according to the second embodiment.
[FIG. 5] FIG. 5 is a diagram schematically showing an overall configuration of a liquid chromatograph analysis device according to a third embodiment.
[FIG. 6] FIG. 6 is a diagram schematically showing an overall configuration of the liquid chromatograph analysis device according to the third embodiment.

### Description of Embodiments

In the following, embodiments of the present invention will be described with reference to the drawings.

In the present embodiment, as an example of a chromatograph, a liquid chromatograph (LC) is exemplified for description. However, the example is not limited to this. For example, the present invention is applicable to other chromatographs including a high performance liquid chromatograph (HPLC), an ultra-high performance liquid chromatograph (UHPLC), and the like.

### <First Embodiment>

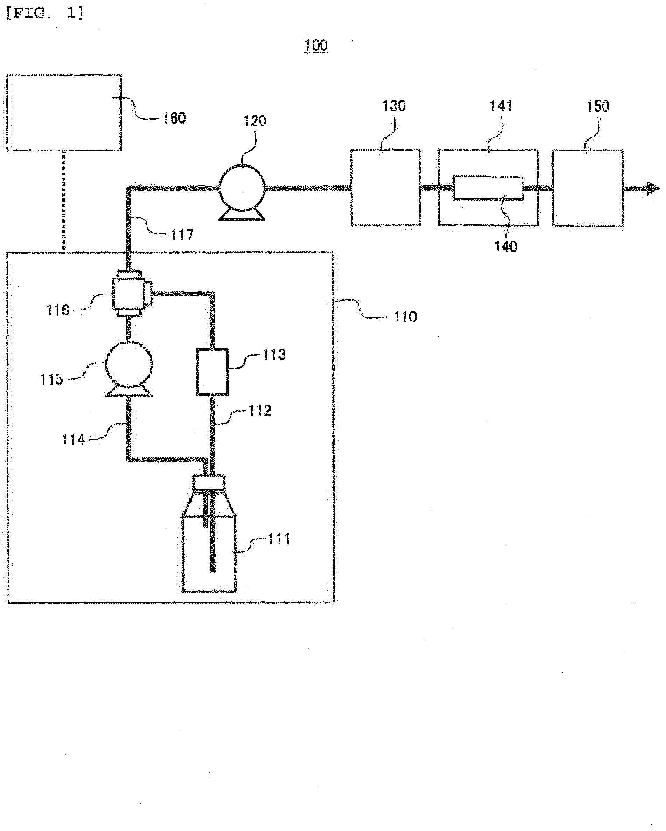

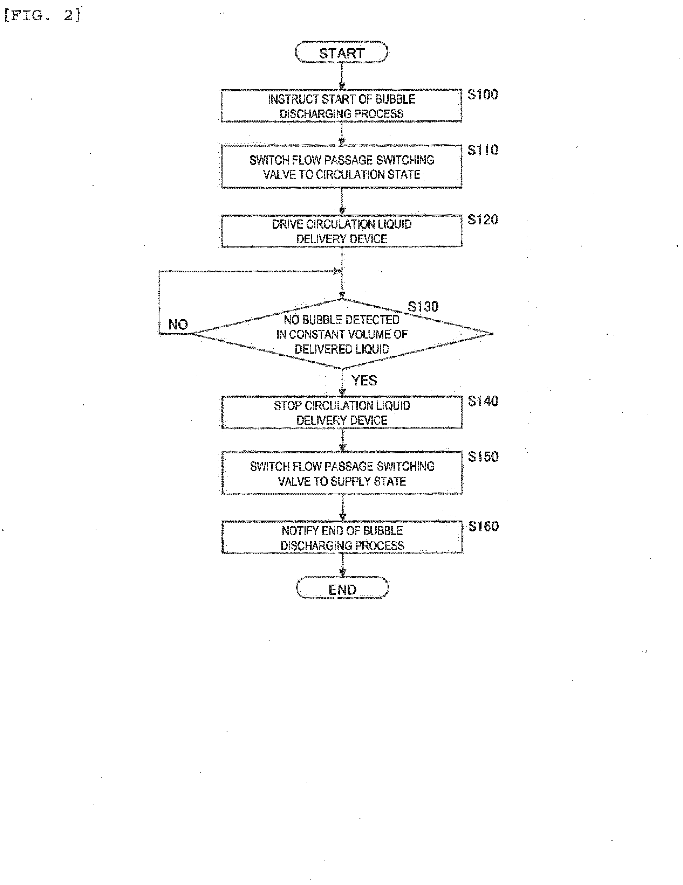

With reference to FIG. 1 and FIG. 2, a first embodiment of the present invention will be described in detail.

FIG. 1 is a diagram schematically showing the overall structure of a liquid chromatograph analysis device according to the present embodiment.

In FIG. 1, the liquid chromatograph analysis device 100 includes a liquid supply device 110 that supplies a solvent to be a mobile phase, a separation column 140 that incorporates a stationary phase, a liquid delivery device (liquid delivery pump) 120 that delivers the liquid (solvent), which is the mobile phase, to the separation column 140, a sample injection device 130 that injects a sample, which is an analysis target, into the liquid delivered from the liquid delivery device 120 to the separation column, a liquid supply device 110 that supplies a liquid to be a solvent to the liquid delivery device 120, an analysis device 150 that analyzes the sample passed through the separation column 140, and a control device 160 that controls the overall operation of the liquid chromatograph analysis device 100 including the liquid supply device 110, the liquid delivery device 120, and the analysis device 150. The separation column 140 is housed in the constant temperature control device 141.

The control device 160 has an input device (a keyboard, a mouse, and the like) and an output device (a display device such as a monitor and a printer and the like), not shown. Note that as the input device and the output device provided on the control device 160, a device that has both an input function and a display function like a touch panel may be used.

The liquid supply device 110 includes a liquid storage container 111 that stores a liquid (solvent) to be supplied to the liquid delivery device 120, supply pipes 112 and 117 that connect the liquid delivery device 120 to the liquid storage container 111, a circulation pipe 114 that connects the intermediate portion of the supply pipes 112 and 117 (i.e., the connection portion between the supply pipe 112 on the liquid storage container 111 side and the supply pipe 117 on the liquid delivery device 120 side) to the liquid storage container 111 and returns the liquid delivered from the supply pipe 112 on the liquid storage container 111 side to the liquid storage container 111, a flow passage switching valve 116 provided on the connection portion between the supply pipes 112 and 117 and the circulation pipe 114, the flow passage switching valve 116 being configured to selectively switch between a liquid delivery state in which the supply pipe 112 on the liquid storage container 111 side and the supply pipe 117 on the liquid delivery device 120 side communicate with each other and a circulation state in which the supply pipe 112 on the liquid storage container 111 side and the circulation pipe 114 communicate with each other, a bubble detection device (bubble detection sensor) 113 provided between the liquid storage container 111 of the supply pipe 112 and the flow passage switching valve 116, the bubble detection device 113 being configured to detect the presence or absence of bubbles of the liquid delivered through the supply pipe 112, and a circulation liquid delivery device (circulation liquid delivery pump) 115 provided on the circulation pipe 114, the circulation liquiddelivery device 115 being configured to deliver a liquid from the flow passage switching valve 116 side to the liquid storage container 111 side.

The supply pipe 112 is disposed such that the end portion on the upstream side is located near the bottom part inside the liquid storage container 111. Moreover, the circulation pipe 114 is provided such that the end portion on the downstream side is located above the end portion of the supply pipe 112 on the upstream side inside the liquid storage container 111.

In the liquid delivery state, the flow passage switching valve 116 connects the supply pipe 112 to the supply pipe 117, and blocks the connection from the supply pipes 112 and 117 to the circulation pipe 114. In this state, the liquid delivery device 120 is driven to aspirate the liquid in the liquid storage container 111 into the liquid delivery device 120 through the supply pipes 112 and 117, and the liquid is delivered to the downstream side (the sample injection device 130 side).

Moreover, in the circulation state, the flow passage switching valve 116 connects the supply pipe 112 to the circulation pipe 114, and blocks the connection from the supply pipe 112 and the circulation pipe 114 to the supply pipe 117. In this state, the circulation liquid delivery device 115 is driven to aspirate the liquid in the liquid storage container 111 into the circulation liquid delivery device 115 through the supply pipe 112 and the circulation pipe 114, and the liquid is again delivered to the liquid storage container 111.

FIG. 2 is a flowchart showing the content of the operation according to the liquid supply device.

In FIG. 2, after performing the replacement work and the like of the liquid storage container 111, when an operator instructs the start of a bubbles discharge process through the input device of the control device 160 (Step S100), and the control device 160 first switches the flow passage switching valve 116 to the circulation state to bring the supply pipe 112 and the circulation pipe 114 into a communication state (Step S110) . Subsequently, the control device 160 drives the circulation liquid delivery device 115 to aspirate the liquid in the liquid storage container 111 through the supply pipe 112 and the circulation pipe 114, and delivers the liquid to the liquid storage container 111 (Step S120) .

At this time, since the liquid in the liquid storage container 111 is circulated through the supply pipe 112 and the circulation pipe 114, the bubbles mixed into the solution inside the supply pipe 112 and the circulation pipe 114 are discharged to the liquid storage container 111 for removal. In other words, for example, even though bubbles are mixed in the solution in the supply pipe 112 due to the replacement work of the liquid storage container 111, it is possible to remove these bubbles.

Subsequently, it is determined whether the bubble detection device 113 detects bubbles when the liquid in a predetermined volume is delivered by the circulation liquid delivery device 115 (Step S130). In the case in which the determined result is NO, i.e., in the case in which bubbles are mixed in the liquid communicating from the liquid storage container 111 to the supply pipe 112, the delivery by the circulation liquid delivery device 115 is continued until the determined result in Step S130 becomes YES. Note that the volume of the liquid delivered by the circulation liquid delivery device 115 can be found from the delivered capacity per unit time of the circulation liquid delivery device 115 and the elapsed time.

Moreover, in the case in which the determined result in Step S130 is YES, i.e., in the case in which bubbles are not mixed in the liquid communicating from the liquid storage container 111 to the supply pipe 112, the circulation liquid delivery device 115 is stopped (Step S140), the flow passage switching valve 116 is switched to the supply state to turn the supply pipes 112 and 117 into the communicating state (Step S150), the display device and the like of the control device 160 notify the operator of the end of the bubbles discharge process (Step S160), and the process is ended.

Note that a configuration may be possible in which after the end of the bubbles discharge process, in the case in which the bubble detection device 113 detects bubbles during performing the analysis operation and the like by driving the liquid delivery device 120, it is determined that the liquid stored in the liquid storage container 111 becomes a prescribed amount or less, (here, the liquid level is dropped to a position below the end portion of the supply pipe 112), the liquid delivery device 120 is stopped, and the operator is urged to replace the liquid storage container 111.

The effect of the present embodiment thus configured will be described.

In the previously existing technique, it is difficult to determine whether bubbles mixed in the mobile phase are sufficiently removed. In the case in which the degree of the operator' s skills is low, it is considered that degassing is performed unnecessarily for a long time or degassing is insufficient.

In contrast to this, in the present embodiment, the liquid supply device 110 is configured to include the liquid storage container 111 that stores a liquid (solvent) to be supplied to the liquid delivery device 120, the supply pipes 112 and 117 that connect the liquid delivery device 120 to the liquid storage container 111, the circulation pipe 114 provided on the intermediate portion of the supply pipes 112 and 117 (i.e., the connection portion between the supply pipe 112 on the liquid storage container 111 side and the supply pipe 117 on the liquid delivery device 120 side) to the liquid storage container 111, the circulation pipe 114 being configured to return the liquid delivered from the supply pipe 112 on the liquid storage container 111 side to the liquid storage container 111, the flow passage switching valve 116 provided on the connection portion between the supply pipes 112 and 117 and the circulation pipe 114, the flow passage switching valve 116 being configured to selectively switch between a liquid delivery state in which the supply pipe 112 on the liquid storage container 111 side and the supply pipe 117 on the liquid delivery device 120 side communicate with each other and a circulation state in which the supply pipe 112 on the liquid storage container 111 side and the circulation pipe 114 communicate with each other, the bubble detection device (bubble detection sensor) 113 provided between the liquid storage container 111 of the supply pipe 112 and the flow passage switching valve 116, the bubble detection device being configured to detect the presence or absence of bubbles of the liquid delivered through the supply pipe 112, and the circulation liquid delivery device (circulation liquid delivery pump) 115 provided on the circulation pipe 114, the circulation liquid delivery device 115 being configured to deliver a liquid from the flow passage switching valve 116 side to the liquid storage container 111 side. The state of the flow passage switching valve 116 is switched into the circulation state, and the circulation liquid delivery device 115 performs circulation and delivery. In the case in which the bubble detection device 113 does not detect bubbles in the liquid, the state of the flow passage switching valve 116 is switched into the liquid delivery state. Accordingly, it is possible to remove bubbles more easily and reliably in the mobile phase regardless of the degree of the operator's skills.

### <Second Embodiment>

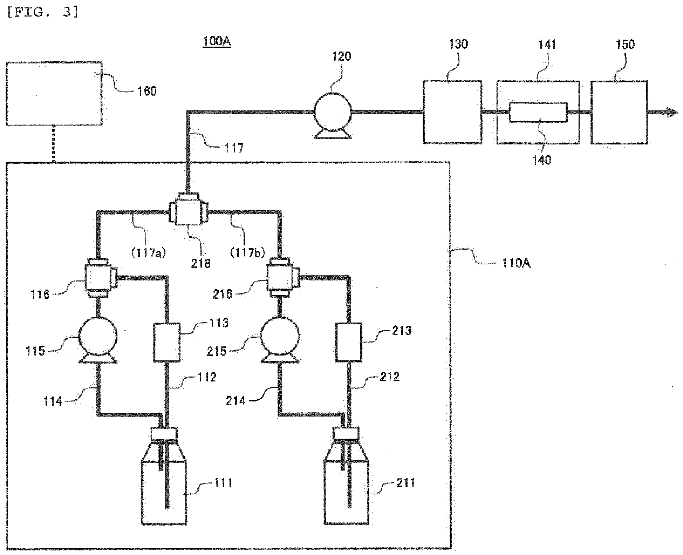

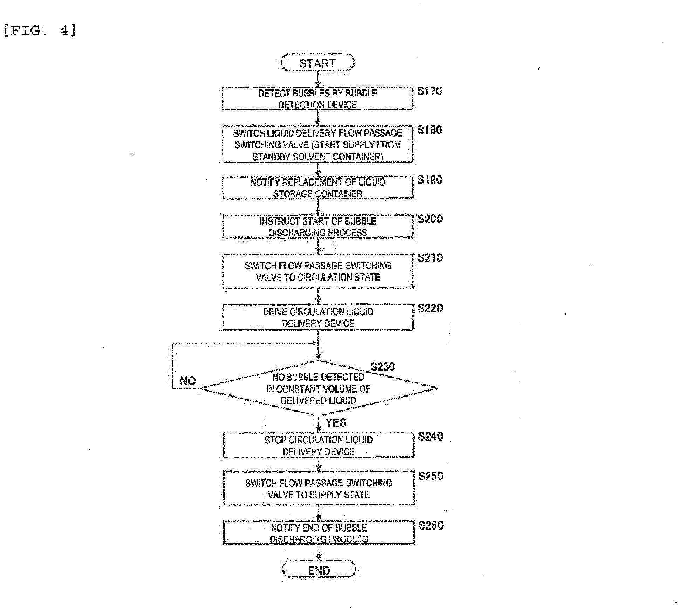

With reference to FIGS. 3 and 4, a second embodiment of the present invention will be described in detail.

The present embodiment is configured such that a plurality of liquid storage containers is switched corresponding to the remaining amount of a liquid.

FIG. 3 is a diagram schematically showing the overall structure of a liquid chromatograph analysis device according to the present embodiment. In the drawing, members similar to those of the first embodiment are designated with the same reference signs, and the description is omitted.

In FIG. 3, a liquid chromatograph analysis device 100A includes a liquid supply device 110A that supplies a solvent to be a mobile phase, a separation column 140 that incorporates a stationary phase, a liquid delivery device (liquid delivery pump) 120 that delivers a liquid (solvent), which is the mobile phase, to the separation column 140, a sample injection device 130 that injects a sample, which is an analysis target, into the liquid delivered from the liquid delivery device 120 to the separation column, a liquid supply device 110 that supplies a liquid to be a solvent to the liquid delivery device 120, an analysis device 150 that analyzes the sample passed through the separation column 140, and a control device 160 that controls the overall operation of the liquid chromatograph analysis device 100 including the liquid supply device 110, the liquid delivery device 120, and the analysis device 150. The separation column 140 is housed in the constant temperature control device 141.

The liquid supply device 110A includes, in addition to the liquid storage container 111, the supply pipes 112 and 117 (117a), the circulation pipe 114, the flow passage switching valve 116, the bubble detection device 113, and the circulation liquid delivery device 115 described in the first embodiment, a liquid storage container 211 that stores liquid (solvent) to be supplied to the liquid delivery device 120, a supply pipe 117 (117b) that connects the liquid delivery device 120 to the liquid storage container 211, a circulation pipe 214 that connects the intermediate portion of the supply pipes 212 and 117b (i.e., the connection portion between the supply pipe 212 on the liquid storage container 211 side and the supply pipe 117b on the liquid delivery device 120 side) to the liquid storage container 211 and returns the liquid delivered from the supply pipe 212 on the liquid storage container 211 side to the liquid storage container 211, a flow passage switching valve 216 provided on the connection portion between the supply pipes 212 and 117b and the circulation pipe 214, the flow passage switching valve 216 being configured to selectively switch between a liquid delivery state in which the supply pipe 212 on the liquid storage container 211 side and the supply pipe 117b on the liquid delivery device 120 side communicate with each other and a circulation state in which the supply pipe 212 on the liquid storage container 211 side and the circulation pipe 214 communicate with each other, a bubble detection device (bubble detection sensor) 213 provided between the liquid storage container 211 and the flow passage switching valve 216 of the supply pipe 212, the bubble detection device 213 being configured to detect the presence or absence of bubbles in the liquid delivered in the supply pipe 212, a circulation liquid delivery device (circulation liquid delivery pump) 215 provided on the circulation pipe 214, the circulation liquid delivery device 215 being configured to deliver the liquid from the flow passage switching valve 216 side to the liquid storage container 211 side, and a liquid delivery flow passage switching valve 218 provided on the branch part of the supply pipes 117a and 117b of the supply pipe 117, the liquid delivery flow passage switching valve 218 being configured to selectively switch between a first liquid delivery state in which the supply pipe 117 is communicated with the liquid storage container 111 side (i.e., the supply pipe 117a side) and a second liquid delivery state in which the supply pipe 117 is communicated with the liquid storage container 211 side (i.e., the supply pipe 117b side).

The supply pipe 212 is disposed such that the end portion on the upstream side is located near the bottom part inside the liquid storage container 211. Moreover, the circulation pipe 214 is provided such that the end portion on the downstream side is located above the end portion of the supply pipe 212 on the upstream side inside the liquid storage container 211.

In the liquid delivery state, the flow passage switching valve 216 connects the supply pipe 212 to the supply pipe 117b, and blocks the connection from the supply pipes 212 and 117b to the circulation pipe 214. In the case in which the state of the liquid delivery flow passage switching valve 218 is switched to the second liquid delivery state, the liquid delivery device 120 is driven to aspirate the liquid in the liquid storage container 211 into the liquid delivery device 120 through the supply pipes 212 and 117b, and the liquid is delivered to the downstream side (the sample injection device 130 side).

Moreover, in the circulation state, the flow passage switching valve 216 connects the supply pipe 212 to the circulation pipe 114, and blocks the connection from the supply pipe 212 and the circulation pipe 214 to the supply pipe 117b. In this state, the circulation liquid delivery device215 is driven to aspirate the liquid in the liquid storage container 211 into the circulation liquid delivery device 215 through the supply pipe 212 and the circulation pipe 214, and the liquid is again delivered to the liquid storage container 211.

In the first liquid delivery state, the liquid delivery flow passage switching valve 218 communicates the supply pipe 117 on the liquid storage container 111 side (i.e., the supply pipe 117a side) to permit the supply of the liquid from the liquid storage container 111 to the liquid delivery device 120, whereas in the second liquid delivery state, the liquid delivery flow passage switching valve 218 communicates the supply pipe 117 on the liquid storage container 211 side (i.e., the supply pipe 117b side) to permit the supply of the liquid from the liquid storage container 111 to the liquid delivery device 120.

FIG. 4 is a flowchart showing the content of the operation according to the liquid supply device of the present embodiment.

First, in the initial state, the case is considered in which the liquid delivery flow passage switching valve 218 is in the first liquid delivery state, and the liquid (solvent) from the liquid storage container 111 is supplied to the liquid delivery device 102. Moreover, at this time, bubbles in the supply pipe 212 of the liquid storage container 211 are removed in advance, and a standby state is achieved.

In FIG. 4, when the bubble detection device 113 detects bubbles during performing the analysis operation and the like by driving the liquid delivery device 120, i.e., when the remaining amount of the liquid stored in the liquid storage container 111 becomes lower than a predetermined amount (Step S170), the liquid delivery flow passage switching valve 218 is switched to the second liquid delivery state, the supply of the liquid from the liquid storage container 211 in the standby state to the liquid delivery device 120 is started (Step S180), and the display device and the like of the control device 160 notify an operator that the replacement of the liquid storage container 111 is necessary (Step S190) .

After performing the replacement work of the liquid storage container 111, the operator instructs the start of a bubbles discharge process through the input device of the control device 160 (Step S200), and the control device 160 first switches the flow passage switching valve 116 to the circulation state to bring the supply pipe 112 and the circulation pipe 114 into a communication state (Step S210). Subsequently, the control device 160 drives the circulation liquid delivery device 115 to aspirate the liquid in the liquid storage container 111 through the supply pipe 112 and the circulation pipe 114, and delivers the liquid to the liquid storage container 111 (Step S220).

At this time, since the liquid in the liquid storage container 111 is circulated through the supply pipe 112 and the circulation pipe 114, the bubbles mixed into the solution inside the supply pipe 112 and the circulation pipe 114 are discharged to the liquid storage container 111 for removal. In other words, for example, even though bubbles are mixed in the solution in the supply pipe 112 due to the replacement work of the liquid storage container 111, it is possible to remove these bubbles.

Subsequently, it is determined whether the bubble detection device 113 detects bubbles when the liquid in a predetermined volume is delivered by the circulation liquid delivery device 115 (Step S230). In the case in which the determined result is NO, i.e., in the case in which bubbles are mixed in the liquid communicating from the liquid storage container 111 to the supply pipe 112, the delivery by the circulation liquid delivery device 115 is continued until the determined result in Step S230 becomes YES. Note that the volume of the liquid delivered by the circulation liquid delivery device 115 can be found from the delivered capacity per unit time of the circulation liquid delivery device 115 and the elapsed time.

Moreover, in the case in which the determined result in Step S230 is YES, i.e., in the case in which bubbles are not mixed in the liquid communicating from the liquid storage container 111 to the supply pipe 112, the circulation liquid delivery device 115 is stopped (Step S240), the flow passage switching valve 116 is switched to the supply state to bring the supply pipes 112 and 117a into the communicating state (Step S250), the display device and the like of the control device 160 notify the operator of the end of the bubbles discharge process (Step S260), and the process is ended.

Thus, the liquid delivery flow passage switching valve 218 is in the second liquid delivery state, the liquid (solvent) from the liquid storage container 211 is supplied to the liquid delivery device 102, bubbles in the supply pipe 112 of the liquid storage container 111 are removed, and the standby state is achieved. In the case in which the amount of the liquid in the liquid storage container 211 is smaller than a predetermined amount, the liquid delivery flow passage switching valve 218 is switched such that the liquid is supplied from the liquid storage container 111 to the liquid delivery device 120 by the similar operation, the liquid storage container 211 is replaced, the bubbles discharge process is performed to achieve the standby state, and thus it is possible to alternately switch a plurality of (here, two) liquid storage containers 111 and 211. In other words, it is possible to continue the analysis operation without waiting for the replacement of the liquid storage container.

The other configurations are similar to the first embodiment.

In the present embodiment thus configured, it is also possible to obtain effects similar to those of the first embodiment.

Moreover, it is possible to continue the analysis operation without waiting for the replacement of the liquid storage container, and it is possible to improve the throughput of analysis results.

Note that in the present embodiment, the event that the capacities of the liquid storage containers 111 and 211 become smaller than the predetermined capacity is determined by detecting bubbles by the bubble detection devices 113 and 213. However, the determination is not limited to this. For example, there are considered a method in which the remaining amounts of the liquid storage containers 111 and 211 are calculated from the set flow rate and delivery time of the liquid delivery device 120 in the control device 160 and a method in which a weight sensor is disposed on the installation parts of the liquid storage containers and the remaining amount of the liquid (solvent) is grasped, a method in which a liquid level sensor is inserted into the inside of the liquid storage container and the remaining amount of the liquid (solvent) is detected, and any other method.

### <Third Embodiment>

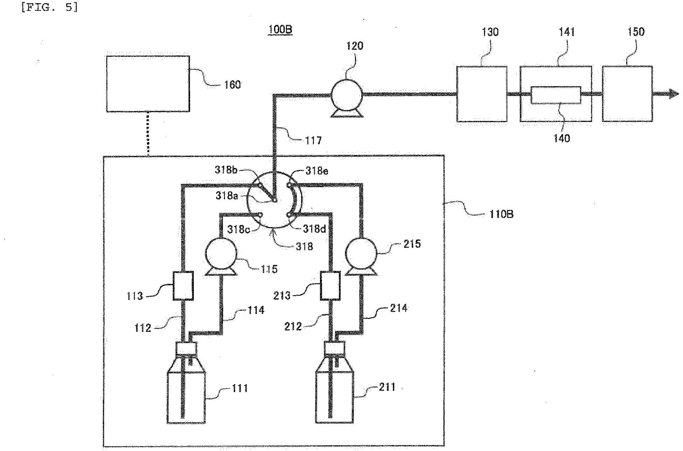

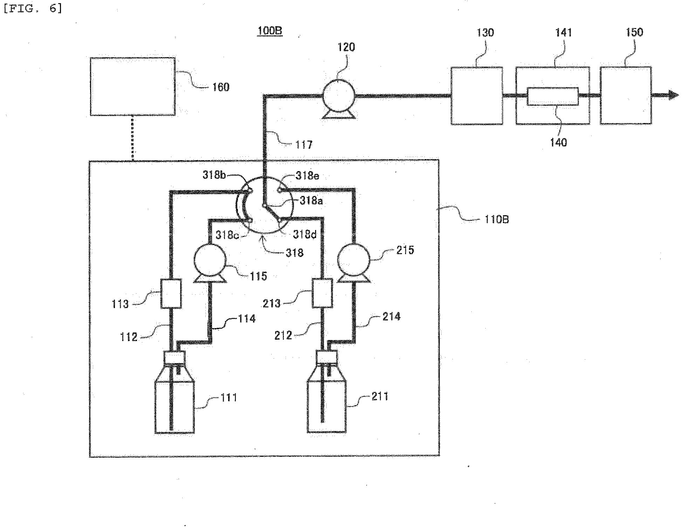

With reference to FIG. 5 and FIG. 6, a third embodiment of the present invention will be described in detail.

The present embodiment uses a flow passage switching valve that integrates the functions of the liquid delivery flow passage switching valve and the switching valve of the second embodiment.

FIG. 5 and FIG. 6 are diagrams schematically showing the overall structure of a liquid chromatograph analysis device according to the present embodiment. In the drawing, members similar to those of the first and the second embodiments are designated with the same reference signs, and the description is omitted.

In FIG. 5 and FIG. 6, a liquid chromatograph analysis device 100B includes a liquid supply device 110B that supplies a solvent to be a mobile phase, a separation column 140 that incorporates a stationary phase, a liquid delivery device (liquid delivery pump) 120 that delivers the liquid (solvent), which is the mobile phase, to the separation column 140, a sample injection device 130 that injects a sample, which is an analysis target, into the liquid delivered from the liquid delivery device 120 to the separation column, a liquid supply device 110 that supplies a liquid to be a solvent to the liquid delivery device 120, an analysis device 150 that analyzes the sample passed through the separation column 140, and a control device 160 that controls the overall operation of the liquid chromatograph analysis device 100 including the liquid supply device 110, the liquid delivery device 120, and the analysis device 150. The separation column 140 is housed in the constant temperature control device 141.

In FIG. 5 and FIG. 6, the functions of the flow passage switching valves 116 and 216 and the liquid delivery flow passage switching valve 218 shown in the second embodiment are integrated into a flow passage switching valve 318.

The flow passage switching valve 318 has five ports 318a to 318e; a supply pipe 117 connected to the liquid delivery device 120 is connected to the port 318a, a supply pipe 112 connected to a liquid storage container 111 is connected to the port 318b, a circulation pipe 114 connected to the liquid storage container 111 is connected to the port 318c, a supply pipe 212 connected to a liquid storage container 211 is connected to the port 318d, and a circulation pipe 214 connected to the liquid storage container 211 is connected to the port 318e.

In the case in which the flow passage switching valve 318 is switched at a position shown in FIG. 5, the supply pipes 112 and 117 are in the communicating state (i.e., this case corresponds to the case in which in the second embodiment, the flow passage switching valve 116 is in the liquid delivery state and the liquid delivery flow passage switching valve 218 is in the first liquid delivery state), and the supply pipe 212 and the circulation pipe 214 are in the communicating state (i.e., this case corresponds to the case in which in the second embodiment, the flow passage switching valve 216 is in the circulation state).

Moreover, in the case in which the flow passage switching valve 318 is switched at a position shown in FIG. 6, the supply pipes 212 and 117 are in the communicating state (i.e., this case corresponds to the case in which in the second embodiment, the flow passage switching valve 216 is in the liquid delivery state and the liquid delivery flow passage switching valve 218 is in the second liquid delivery state), and the supply pipe 112 and the circulation pipe 114 are in the communicating state (i.e., this case corresponds to the case in which in the second embodiment, the flow passage switching valve 116 is in the circulation state).

In other words, it is possible to integrally achieve the switching functions of the flow passage switching valves 116 and 216 and the liquid delivery flow passage switching valve 218 in the second embodiment by switching the flow passage switching valve 318 of the present embodiment alone.

Other configurations are similar to those of the first and the second embodiments.

In the present embodiment thus configured, it is also possible to obtain effects similar to those of the first and the second embodiments.

### <Additional Remark>

Note that the present invention is not limited to the foregoing embodiments, and includes various exemplary modifications in the scope not deviating from the scope of the invention as defined in the appended claims. Moreover, the present invention is not limited to ones including all the configurations described in the foregoing embodiments, and includes ones having the configurations partially removed. Furthermore, a part of or all the configurations and functions may be implemented by being designed with an integrated circuit, for example. In addition, the configurations, the functions, and the like may be implemented by software that interprets programs implementing and executing the functions with processor.

### Reference Sign List

100, 100A, 100B: liquid chromatograph analysis device
102: liquid delivery device
110: liquid supply device
110A, 110B: liquid supply device
111: liquid storage container
112: supply pipe
113: bubble detection device (bubble detection sensor)
114: circulation pipe
115: circulation liquid delivery device (circulation liquid delivery pump)
116: flow passage switching valve
117: supply pipe
117a, 117b: supply pipe
120: liquid delivery device (liquid delivery pump)
130: sample injection device
140: separation column
141: constant temperature control device
150: analysis device
160: control device
211: liquid storage container
212: supply pipe
213: bubble detection device (bubble detection sensor)
214: circulation pipe
215: circulation liquid delivery device (circulation liquid delivery pump)
216: flow passage switching valve
218: liquid delivery flow passage switching valve
318: flow passage switching valve
318a to 318e: port

## Claims

1. A liquid chromatograph, comprising:
a separation column incorporating a stationary phase;
a liquid delivery device configured to deliver a liquid, which is a mobile phase, to the separation column;
a sample injection device configured to inject a sample to be analyzed into the liquid delivered from the liquid delivery device to the separation column;
a liquid supply device configured to supply the liquid to the liquid delivery device; and
a control device configured to control operations of the liquid delivery device and the liquid supply device, wherein
the liquid supply device includes
a liquid storage container configured to store the liquid to be supplied to the liquid delivery device,
a supply pipe configured to connect the liquid delivery device and the liquid storage container,
a circulation pipe configured to connect an intermediate portion of the supply pipe and the liquid storage container and return the liquid delivered through the supply pipe to the liquid storage container,
a flow passage switching valve provided on a connection portion between the supply pipe and the circulation pipe, and configured to selectively switch between a liquid delivery state in which the supply pipe on a liquid storage container side and the supply pipe on the liquid delivery device side communicate with each other and a circulation state in which the supply pipe and the circulation pipe on a liquid storage container side communicate with each other,
a bubble detection device provided on the supply pipe between the liquid storage container and the flow passage switching valve and configured to detect presence or absence of bubbles of the liquid delivered through the supply pipe, and
a circulation liquid delivery device provided on the circulation pipe and configured to deliver the liquid from a flow passage switching valve side to a liquid storage container side, and
the control device is configured to switch the flow passage switching valve to the circulation state to perform a circulation liquid delivery by the circulation liquid delivery device, and switch the flow passage switching valve to the liquid delivery state when the bubbles of the liquid are not detected by the bubble detection device.

2. The liquid chromatograph according to claim 1, wherein
the liquid supply device includes
another liquid storage container configured to store the liquid to be supplied to the liquid delivery device,
another supply pipe configured to connect the supply pipe between the liquid delivery device and the flow passage switching valve and the other liquid storage container,
another circulation pipe c6nfigured to connect the intermediate portion of the supply pipe and the other liquid storage container and return the liquid delivered through the other supply pipe to the other liquid storage container,
another flow passage switching valve provided on a connection portion between the other supply pipe and the other circulation pipe, and configured to selectively switch between a liquid delivery state in which the other liquid storage container side and the other supply pipe on the liquid delivery device side communicate with each other and a circulation state in which the other supply pipe and the other circulation pipe on the other liquid storage container side communicate with each other,
another bubble detection device provided on the other supply pipe between the other liquid storage container and the other flow passage switching valve and configured to detect presence or absence of bubbles of the liquid delivered through the other supply pipe,
another circulation liquid delivery device provided on the other circulation pipe, and configured to deliver the liquid from the other flow passage switching valve side to the other liquid storage container side, and
a liquid delivery flow passage switching valve provided on a connection portion between the supply pipe and the other supply pipe, and configured to selectively switch between a first liquid delivery state in which the supply pipe on the liquid storage container side and the supply pipe on the liquid delivery device side communicate with each other and a second liquid delivery state in which the other supply pipe on the other liquid storage container side and the supply pipe on the liquid delivery device side communicate with each other, wherein
the control device is configured to, in a case where the liquid delivery flow passage switching valve is in the first liquid delivery state, switch the liquid delivery flow passage switching valve to the second liquid delivery state when a remaining amount of the liquid stored in the liquid storage container is detected to be less than a predetermined amount.

3. The liquid chromatograph according to claim 1, wherein
the liquid supply device includes
another liquid storage container configured to store the liquid to be supplied to the liquid delivery device,
another supply pipe configured to connect the flow passage switching valve and the other liquid storage container,
another circulation pipe configured to connect the flow passage switching valve and the other liquid storage container and return the liquid delivered through the other supply pipe to the other liquid storage container,
another bubble detection device provided on the other supply pipe between the other liquid storage container and the flow passage switching valve and conf igured to detect presence or absence of bubbles of the liquid delivered through the other supply pipe, and
another circulation liquid delivery device provided on the other circulation pipe and configured to deliver the liquid from the flow passage switching valve side to the other liquid storage container side, wherein
the flow passage switching valve is capable of selectively switching between a first liquid delivery circulation state in which the liquid storage container side and the supply pipe on the liquid delivery device side communicate with each other and the other supply pipe on the other liquid storage container side and the other circulation pipe communicate with each other and a second liquid delivery circulation state in which the other supply pipe and the supply pipe on the liquid delivery device side communicate with each other and the supply pipe on the liquid storage container side and the circulation pipe communicate with each other, and
the control device is configured to, in a case where the flow passage switching valve is in the first liquid delivery circulation state, switch the flow passage switching valve to the second liquid delivery circulation state when a remaining amount of the liquid stored in the liquid storage container is detected to be less than a predetermined amount.

4. A liquid delivery method of a liquid chromatograph,
the liquid chromatograph including
a separation column incorporating a stationary phase;
a liquid delivery device configured to deliver a liquid, which is a mobile phase, to the separation column;
a sample injection device conf igured to inject a sample to be analyzed into the liquid delivered from the liquid delivery device to the separation column;
a liquid supply device configured to supply the liquid to the liquid delivery device; and
a control device configured to control operations of the liquid delivery device and the liquid supply device,
the liquid delivery method comprising:
delivering the liquid stored in the liquid storage container from a supply pipe to the liquid storage container via a circulation pipe; and
supplying the liquid stored in the liquid storage container to the liquid delivery device via the supply pipe when bubbles of the liquid delivered through the circulation pipe are not detected.

## Patentansprüche

1. Flüssigkeitschromatograph umfassend:
eine Trennsäule, die eine stationäre Phase enthält;
eine Flüssigkeitsabgabevorrichtung, die konfiguriert ist, um eine Flüssigkeit, die eine mobile Phase ist, an die Trennsäule abzugeben;
eine Probeninjektionsvorrichtung, die konfiguriert ist, um eine zu analysierende Probe in die Flüssigkeit zu injizieren, die von der Flüssigkeitsabgabevorrichtung an die Trennsäule abgegeben wird;
eine Flüssigkeitszufuhrvorrichtung, die konfiguriert ist, um die Flüssigkeit an die Flüssigkeitsabgabevorrichtung zuzuführen; und
eine Steuervorrichtung, die konfiguriert ist, um Operationen der Flüssigkeitsabgabevorrichtung und der Flüssigkeitszufuhrvorrichtung zu steuern, wobei
die Flüssigkeitszufuhrvorrichtung umfasst
einen Flüssigkeitsspeicherbehälter, der konfiguriert ist, um die Flüssigkeit zu speichern, die an die Flüssigkeitsabgabevorrichtung zugeführt werden soll,
ein Zufuhrrohr, das konfiguriert ist, um die Flüssigkeitsabgabevorrichtung und den Flüssigkeitsspeicherbehälter zu verbinden,
ein Zirkulationsrohr, das konfiguriert ist, um einen Zwischenabschnitt des Zufuhrrohrs und des Flüssigkeitsspeicherbehälters zu verbinden und die Flüssigkeit, die durch das Zufuhrrohr abgegeben wird, an den Flüssigkeitsspeicherbehälter zurückzuführen,
ein Strömungsdurchgangsumschaltventil, das an einem Verbindungsabschnitt zwischen dem Zufuhrrohr und dem Zirkulationsrohr vorgesehen ist und konfiguriert ist, um selektiv zwischen einem Flüssigkeitsabgabezustand, in dem das Zufuhrrohr auf einer Flüssigkeitsspeicherbehälterseite und das Zufuhrrohr auf der Flüssigkeitsabgabevorrichtungsseite miteinander in Verbindung stehen, und einem Zirkulationszustand, in dem das Zufuhrrohr und das Zirkulationsrohr auf einer Flüssigkeitsspeicherbehälterseite miteinander in Verbindung stehen, umzuschalten,
eine Blasendetektionsvorrichtung, die an dem Zufuhrrohr zwischen dem Flüssigkeitsspeicherbehälter und dem Strömungsdurchgangsumschaltventil vorgesehen ist und konfiguriert ist, um das Vorhandensein oder Fehlen von Blasen der Flüssigkeit, die durch das Zufuhrrohr abgegeben wird, zu detektieren, und
eine Zirkulationsflüssigkeitsabgabevorrichtung, die an dem Zirkulationsrohr vorgesehen ist und konfiguriert ist, um die Flüssigkeit von einer Strömungsdurchgangsumschaltventilseite an eine Flüssigkeitsspeicherbehälterseite abzugeben, und
die Steuervorrichtung konfiguriert ist, um das Strömungsdurchgangsumschaltventil in den Zirkulationszustand umzuschalten, um eine Zirkulationsflüssigkeitsabgabe durch die Zirkulationsflüssigkeitsabgabevorrichtung durchzuführen, und das Strömungsdurchgangsumschaltventil in den Flüssigkeitsabgabezustand umzuschalten, wenn die Blasen der Flüssigkeit nicht durch die Blasendetektionsvorrichtung detektiert werden.

2. Flüssigkeitschromatograph nach Anspruch 1, wobei
die Flüssigkeitszufuhrvorrichtung umfasst
einen weiteren Flüssigkeitsspeicherbehälter, der konfiguriert ist, um die Flüssigkeit zu speichern, die an die Flüssigkeitsabgabevorrichtung zugeführt werden soll,
ein weiteres Zufuhrrohr, das konfiguriert ist, um das Zufuhrrohr zwischen der Flüssigkeitsabgabevorrichtung und dem Strömungsdurchgangsumschaltventil und dem weiteren Flüssigkeitsspeicherbehälter zu verbinden,
ein weiteres Zirkulationsrohr, das konfiguriert ist, um den Zwischenabschnitt des Zufuhrrohrs und des weiteren Flüssigkeitsspeicherbehälters zu verbinden und die Flüssigkeit, die durch das weitere Zufuhrrohr abgegeben wird, an den weiteren Flüssigkeitsspeicherbehälter zurückzuführen,
ein weiteres Strömungsdurchgangsumschaltventil, das an einem Verbindungsabschnitt zwischen dem weiteren Zufuhrrohr und dem weiteren Zirkulationsrohr vorgesehen ist und konfiguriert ist, um selektiv zwischen einem Flüssigkeitsabgabezustand, in dem die weitere Flüssigkeitsspeicherbehälterseite und das weitere Zufuhrrohr auf der Flüssigkeitsabgabevorrichtungsseite miteinander in Verbindung stehen, und einem Zirkulationszustand, in dem das weitere Zufuhrrohr und das weitere Zirkulationsrohr auf der weiteren Flüssigkeitsspeicherbehälterseite miteinander in Verbindung stehen, umzuschalten,
eine weitere Blasendetektionsvorrichtung, die an dem weiteren Zufuhrrohr zwischen dem weiteren Flüssigkeitsspeicherbehälter und dem weiteren Strömungsdurchgangsumschaltventil vorgesehen ist und konfiguriert ist, um das Vorhandensein oder Fehlen von Blasen der Flüssigkeit, die durch das weitere Zufuhrrohr abgegeben wird, zu detektieren,
eine weitere Zirkulationsflüssigkeitsabgabevorrichtung, die an dem weiteren Zirkulationsrohr vorgesehen ist und konfiguriert ist, um die Flüssigkeit von der weiteren Strömungsdurchgangsumschaltventilseite an die weitere Flüssigkeitsspeicherbehälterseite abzugeben, und
ein Flüssigkeitsabgabeströmungsdurchgangsumschaltventil, das an einem Verbindungsabschnitt zwischen dem Zufuhrrohr und dem weiteren Zufuhrrohr vorgesehen ist und konfiguriert ist, um selektiv zwischen einem ersten Flüssigkeitsabgabezustand, in dem das Zufuhrrohr auf der Flüssigkeitsspeicherbehälterseite und das Zufuhrrohr auf der Flüssigkeitsabgabevorrichtungsseite miteinander in Verbindung stehen, und einem zweiten Flüssigkeitsabgabezustand, in dem das weitere Zufuhrrohr auf der weiteren Flüssigkeitsspeicherbehälterseite und das Zufuhrrohr auf der Flüssigkeitsabgabevorrichtungsseite miteinander in Verbindung stehen, umzuschalten, wobei
die Steuervorrichtung konfiguriert ist, um in einem Fall, in dem sich das Flüssigkeitsabgabeströmungsdurchgangsumschaltventil in dem ersten Flüssigkeitsabgabezustand befindet, das Flüssigkeitsabgabeströmungsdurchgangsumschaltventil in den zweiten Flüssigkeitsabgabezustand umzuschalten, wenn detektiert wird, dass eine verbleibende Menge der Flüssigkeit, die in dem Flüssigkeitsspeicherbehälter gespeichert ist, kleiner als eine vorbestimmte Menge ist.

3. Flüssigkeitschromatograph nach Anspruch 1, wobei
die Flüssigkeitszufuhrvorrichtung umfasst
einen weiteren Flüssigkeitsspeicherbehälter, der konfiguriert ist, um die Flüssigkeit zu speichern, die an die Flüssigkeitsabgabevorrichtung zugeführt werden soll,
ein weiteres Zufuhrrohr, das konfiguriert ist, um das Strömungsdurchgangsumschaltventil und den weiteren Flüssigkeitsspeicherbehälter zu verbinden,
ein weiteres Zirkulationsrohr, das konfiguriert ist, um das Strömungsdurchgangsumschaltventil und den weiteren Flüssigkeitsspeicherbehälter zu verbinden und die Flüssigkeit, die durch das weitere Zufuhrrohr abgegeben wird, an den weiteren Flüssigkeitsspeicherbehälter zurückzuführen,
eine weitere Blasendetektionsvorrichtung, die an dem weiteren Zufuhrrohr zwischen dem weiteren Flüssigkeitsspeicherbehälter und dem Strömungsdurchgangsumschaltventil vorgesehen ist und konfiguriert ist, um das Vorhandensein oder Fehlen von Blasen der Flüssigkeit, die durch das weitere Zufuhrrohr abgegeben wird, zu detektieren, und
eine weitere Zirkulationsflüssigkeitsabgabevorrichtung, die an dem weiteren Zirkulationsrohr vorgesehen ist und konfiguriert ist, um die Flüssigkeit von der Strömungsdurchgangsumschaltventilseite an die weitere Flüssigkeitsspeicherbehälterseite abzugeben, wobei
das Strömungsdurchgangsumschaltventil in der Lage ist, selektiv zwischen einem ersten Flüssigkeitsabgabezirkulationszustand, in dem die Flüssigkeitsspeicherbehälterseite und das Zufuhrrohr auf der Flüssigkeitsabgabevorrichtungsseite miteinander in Verbindung stehen und das weitere Zufuhrrohr auf der weiteren Flüssigkeitsspeicherbehälterseite und das weitere Zirkulationsrohr miteinander in Verbindung stehen, und einem zweiten Flüssigkeitsabgabezirkulationszustand, in dem das weitere Zufuhrrohr und das Zufuhrrohr auf der Flüssigkeitsabgabevorrichtungsseite miteinander in Verbindung stehen und das Zufuhrrohr auf der Flüssigkeitsspeicherbehälterseite und das Zirkulationsrohr miteinander in Verbindung stehen, umzuschalten, und
die Steuervorrichtung konfiguriert ist, um in einem Fall, in dem sich das Strömungsdurchgangsumschaltventil in dem ersten Flüssigkeitsabgabezirkulationszustand befindet, das Strömungsdurchgangsumschaltventil in den zweiten Flüssigkeitsabgabezirkulationszustand umzuschalten, wenn detektiert wird, dass eine verbleibende Menge der Flüssigkeit, die in dem Flüssigkeitsspeicherbehälter gespeichert ist, kleiner als eine vorbestimmte Menge ist.

4. Flüssigkeitsabgabeverfahren eines Flüssigkeitschromatographen,
wobei der Flüssigkeitschromatograph umfasst
eine Trennsäule, die eine stationäre Phase enthält;
eine Flüssigkeitsabgabevorrichtung, die konfiguriert ist, um eine Flüssigkeit, die eine mobile Phase ist, an die Trennsäule abzugeben;
eine Probeninjektionsvorrichtung, die konfiguriert ist, um eine zu analysierende Probe in die Flüssigkeit zu injizieren, die von der Flüssigkeitsabgabevorrichtung an die Trennsäule abgegeben wird;
eine Flüssigkeitszufuhrvorrichtung, die konfiguriert ist, um die Flüssigkeit an die Flüssigkeitsabgabevorrichtung zuzuführen; und
eine Steuervorrichtung, die konfiguriert ist, um Operationen der Flüssigkeitsabgabevorrichtung und der Flüssigkeitszufuhrvorrichtung zu steuern,
wobei das Flüssigkeitsabgabeverfahren umfasst:
Abgeben der Flüssigkeit, die in dem Flüssigkeitsspeicherbehälter gespeichert ist, von einem Zufuhrrohr an den Flüssigkeitsspeicherbehälter über ein Zirkulationsrohr; und
Zuführen der Flüssigkeit, die in dem Flüssigkeitsspeicherbehälter gespeichert ist, an die Flüssigkeitsabgabevorrichtung über das Zufuhrrohr, wenn Blasen der Flüssigkeit, die durch das Zirkulationsrohr abgegeben wird, nicht detektiert werden.

## Revendications

1. Chromatographe liquide, comprenant :
une colonne de séparation incorporant une phase stationnaire ;
un dispositif de distribution de liquide configuré pour distribuer un liquide, qui est une phase mobile, à la colonne de séparation ;
un dispositif d'injection d'échantillon configuré pour injecter un échantillon à analyser dans le liquide distribué du dispositif de distribution de liquide à la colonne de séparation ;
un dispositif d'alimentation en liquide configuré pour fournir le liquide au dispositif de distribution de liquide ; et
un dispositif de commande configuré pour commander des opérations du dispositif de distribution de liquide et du dispositif d'alimentation en liquide, dans lequel
le dispositif d'alimentation en liquide inclut
un récipient de stockage de liquide configuré pour stocker le liquide à fournir au dispositif de distribution de liquide,
un tuyau d'alimentation configuré pour raccorder le dispositif de distribution de liquide et le récipient de stockage de liquide,
un tuyau de circulation configuré pour raccorder une partie intermédiaire du tuyau d'alimentation et le récipient de stockage de liquide et renvoyer le liquide distribué à travers le tuyau d'alimentation au récipient de stockage de liquide,
une soupape de commutation de passage d'écoulement prévue sur une partie de raccordement entre le tuyau d'alimentation et le tuyau de circulation, et configurée pour commuter sélectivement entre un état de distribution de liquide dans lequel le tuyau d'alimentation sur un côté récipient de stockage de liquide et le tuyau d'alimentation sur le côté dispositif de distribution de liquide communiquent l'un avec l'autre et un état de circulation dans lequel le tuyau d'alimentation et le tuyau de circulation sur un côté récipient de stockage de liquide communiquent l'un avec l'autre,
un dispositif de détection de bulles prévu sur le tuyau d'alimentation entre le récipient de stockage de liquide et la soupape de commutation de passage d'écoulement et configuré pour détecter la présence ou l'absence de bulles du liquide distribué à travers le tuyau d'alimentation, et
un dispositif de distribution de liquide de circulation prévu sur le tuyau de circulation et configuré pour distribuer le liquide d'un côté soupape de commutation de passage d'écoulement à un côté récipient de stockage de liquide, et
le dispositif de commande est configuré pour commuter la soupape de commutation de passage d'écoulement à l'état de circulation pour effectuer une distribution de liquide de circulation par le dispositif de distribution de liquide de circulation, et commuter la soupape de commutation de passage d'écoulement à l'état de distribution de liquide lorsque les bulles du liquide ne sont pas détectées par le dispositif de détection de bulles.

2. Chromatographe liquide selon la revendication 1, dans lequel
le dispositif d'alimentation en liquide inclut
un autre récipient de stockage de liquide configuré pour stocker le liquide à fournir au dispositif de distribution de liquide,
un autre tuyau d'alimentation configuré pour raccorder le tuyau d'alimentation entre le dispositif de distribution de liquide et la soupape de commutation de passage d'écoulement et l'autre récipient de stockage de liquide,
un autre tuyau de circulation configuré pour raccorder la partie intermédiaire du tuyau d'alimentation et l'autre récipient de stockage de liquide et renvoyer le liquide distribué à travers l'autre tuyau d'alimentation à l'autre récipient de stockage de liquide,
une autre soupape de commutation de passage d'écoulement prévue sur une partie de raccordement entre l'autre tuyau d'alimentation et l'autre tuyau de circulation, et configurée pour commuter sélectivement entre un état de distribution de liquide dans lequel l'autre côté récipient de stockage de liquide et l'autre tuyau d'alimentation sur le côté dispositif de distribution de liquide communiquent l'un avec l'autre et un état de circulation dans lequel l'autre tuyau d'alimentation et l'autre tuyau de circulation sur l'autre côté récipient de stockage de liquide communiquent l'un avec l'autre,
un autre dispositif de détection de bulles prévu sur l'autre tuyau d'alimentation entre l'autre récipient de stockage de liquide et l'autre soupape de commutation de passage d'écoulement et configuré pour détecter la présence ou l'absence de bulles du liquide distribué à travers l'autre tuyau d'alimentation,
un autre dispositif de distribution de liquide de circulation prévu sur l'autre tuyau de circulation, et configuré pour distribuer le liquide de l'autre côté soupape de commutation de passage d'écoulement à l'autre côté récipient de stockage de liquide, et
une soupape de commutation de passage d'écoulement de distribution de liquide prévue sur une partie de raccordement entre le tuyau d'alimentation et l'autre tuyau d'alimentation, et configurée pour commuter sélectivement entre un premier état de distribution de liquide dans lequel le tuyau d'alimentation sur le côté récipient de stockage de liquide et le tuyau d'alimentation sur le côté dispositif de distribution de liquide communiquent l'un avec l'autre et un second état de distribution de liquide dans lequel l'autre tuyau d'alimentation sur l'autre côté récipient de stockage de liquide et le tuyau d'alimentation sur le côté dispositif de distribution de liquide communiquent l'un avec l'autre, dans lequel
le dispositif de commande est configuré pour, dans un cas où la soupape de commutation de passage d'écoulement de distribution de liquide est dans le premier état de distribution de liquide, commuter la soupape de commutation de passage d'écoulement de distribution de liquide au second état de distribution de liquide lorsqu'une quantité restante du liquide stocké dans le récipient de stockage de liquide est détectée comme étant inférieure à une quantité prédéterminée.

3. Chromatographe liquide selon la revendication 1, dans lequel
le dispositif d'alimentation en liquide inclut
un autre récipient de stockage de liquide configuré pour stocker le liquide à fournir au dispositif de distribution de liquide,
un autre tuyau d'alimentation configuré pour raccorder la soupape de commutation de passage d'écoulement et l'autre récipient de stockage de liquide,
un autre tuyau de circulation configuré pour raccorder la soupape de commutation de passage d'écoulement et l'autre récipient de stockage de liquide et renvoyer le liquide distribué à travers l'autre tuyau d'alimentation à l'autre récipient de stockage de liquide,
un autre dispositif de détection de bulles prévu sur l'autre tuyau d'alimentation entre l'autre récipient de stockage de liquide et la soupape de commutation de passage d'écoulement et configuré pour détecter la présence ou l'absence de bulles du liquide distribué à travers l'autre tuyau d'alimentation, et
un autre dispositif de distribution de liquide de circulation prévu sur l'autre tuyau de circulation et configuré pour distribuer le liquide du côté soupape de commutation de passage d'écoulement à l'autre côté récipient de stockage de liquide, dans lequel
la soupape de commutation de passage d'écoulement est capable de commuter sélectivement entre un premier état de circulation de distribution de liquide dans lequel le côté récipient de stockage de liquide et le tuyau d'alimentation sur le côté dispositif de distribution de liquide communiquent l'un avec l'autre et l'autre tuyau d'alimentation sur l'autre côté récipient de stockage de liquide et l'autre tuyau de circulation communiquent l'un avec l'autre et un second état de circulation de distribution de liquide dans lequel l'autre tuyau d'alimentation et le tuyau d'alimentation sur le côté dispositif de distribution de liquide communiquent l'un avec l'autre et le tuyau d'alimentation sur le côté récipient de stockage de liquide et le tuyau de circulation communiquent l'un avec l'autre, et
le dispositif de commande est configuré pour, dans un cas où la soupape de commutation de passage d'écoulement est dans le premier état de circulation de distribution de liquide, commuter la soupape de commutation de passage d'écoulement au second état de circulation de distribution de liquide lorsqu'une quantité restante du liquide stocké dans le récipient de stockage de liquide est détectée comme étant inférieure à une quantité prédéterminée.

4. Procédé de distribution de liquide d'un chromatographe liquide,
le chromatographe liquide incluant
une colonne de séparation incorporant une phase stationnaire ;
un dispositif de distribution de liquide configuré pour distribuer un liquide, qui est une phase mobile, à la colonne de séparation ;
un dispositif d'injection d'échantillon configuré pour injecter un échantillon à analyser dans le liquide distribué du dispositif de distribution de liquide à la colonne de séparation ;
un dispositif d'alimentation en liquide configuré pour fournir le liquide au dispositif de distribution de liquide ; et
un dispositif de commande configuré pour commander des opérations du dispositif de distribution de liquide et du dispositif d'alimentation en liquide,
le procédé de distribution de liquide comprenant :
la distribution du liquide stocké dans le récipient de stockage de liquide d'un tuyau d'alimentation au récipient de stockage de liquide via un tuyau de circulation ; et
la fourniture du liquide stocké dans le récipient de stockage de liquide au dispositif de distribution de liquide via le tuyau d'alimentation lorsque des bulles du liquide distribué à travers le tuyau de circulation ne sont pas détectées.
